# NEW EUROPEAN PATENT SPECIFICATION

(11) **EP 3 003 833 B2**
(45) Date of publication and mention of the opposition decision: **09.11.2022**
(45) Mention of the grant of the patent: 09.10.2019
(21) Application number: 13886546.4
(22) Date of filing: 03.06.2013
(51) Int. Cl.: B62D 25/02, B62D 33/06

(54) **A TRUCK CHASSIS, A TRUCK CAB AND A TRUCK COMPRISING SAID CHASSIS AND CAB**
LASTKRAFTWAGENCHASSIS, LASTKRAFTWAGENKABINE UND LASTKRAFTWAGEN MIT BESAGTER CHASSIS UND KABINE
CHÂSSIS ET CABINE DE CAMION, ET CAMION COMPORTANT LESDITS CHÂSSIS ET CABINE

(43) Date of publication of application: 13.04.2016
(73) Proprietor: Volvo Truck Corporation, 405 08 Göteborg (SE)
(72) Inventor: LEVIN, Göran, SE-425 65 Hisings-Kärra (SE)
(74) Representative: Valea AB
(86) International application number: PCT/SE2013/000091
(87) International publication number: WO 2014/196903

(56) References cited:
- EP-A1- 0 361 511
- EP-A1- 0 361 511
- WO-A1-2010/005346
- DE-A1- 1 555 144
- DE-A1- 4 341 693
- DE-A1-102006 010 183
- US-A- 4 193 629
- US-A1- 2010 320 800
- US-A1- 2010 320 800
- US-A1- 2010 320 803
- US-B1- 6 726 272

## Description

### TECHNICAL FIELD

The present invention relates to a truck chassis, a truck cab and a truck comprising the chassis and cab. The technical field is related to a truck with a so-called forward-control cab, which is located above a power source, such as an internal combustion engine and preferably a diesel engine. To provide access to the power source with respect to service and maintenance the entire cab can be tilted forwards. Further, the truck relates to a so-called semi-trailer tractor. Such a semi-trailer tractor has no cargo space. Instead, it is fitted with a fifth wheel to which a semi-trailer (with cargo space) may be connected.

According to its abstract, DE 43 41 693 A1 relates to a screening device for diverting and/or absorbing sound waves. It is shaped to follow the outer contour of the driver's cab of a goods vehicle, and is arranged to cover a significant part of the gap between the cab and the vehicle frame. The screening device has two flanks which join to form a hill-shaped cross section mounted on the vehicle frame for penetration into a recess in the cab. The screening device is removably attached to a mudguard fixed to the vehicle frame and/or to an access step and/or to a bumper.

### SUMMARY OF THE INVENTION

An object of the present invention is to achieve a truck, which is configured for achieving an efficient use of the available space in the truck for packaging of components and/or improving driver comfort/visibility and especially to create conditions for a modular truck design.

This object is achieved by the features of the independent claims. The other claims and the description disclose advantageous embodiments of the invention.

According to a first aspect of the invention, it is provided a truck chassis, which comprises an upper part defining an interface to a cab, wherein an external structure of the upper chassis part has an upper demarcation line extending partly around a space for a wheel arch between a rear position on top of the wheel arch space and a forwards position in front of the wheel arch space, which forwards position is at a lower position in a height direction of the chassis than the rear position. The wheel arch space is positioned at a driver's side of the chassis.

This truck chassis design creates conditions for an efficient use of the available space forwards of the front wheel at the driver's side of the truck. More specifically, by designing the truck cab so that the interface between the chassis and the cab is designed so that the upper demarcation line of the chassis is commensurate with a lower demarcation line of the cab, the cab will enclose an available space forwards of the front wheel. Consequently, said available space forwards of the front wheel may be used for packaging of components in the cab or for leg space for the driver.

The forwards position is preferably at least 15 cm, more preferably at least 20 cm and advantageously at least 25 cm lower than the rear position in the chassis height direction.

According to one embodiment of the invention, said upper demarcation line of the chassis extends below said rear position a distance which is at least 25% and preferably at least 50% of the extension of the wheel arch space in a longitudinal direction of the chassis from the wheel arch space towards a front surface of the chassis. Such a design of the upper demarcation line of the chassis creates conditions for that the available space forwards of the front wheel at the driver's side of the truck may be used for packaging of components in the size of a climate unit in the cab or for leg space comfortable for the driver.

According to another embodiment of the invention, the upper demarcation line of the chassis extending partly around the wheel arch space extends a first distance from the rear position on top of the wheel arch space around the wheel arch space to an intermediate position in the vicinity of the wheel arch space at least 20 degrees and less than 120 degrees from the position on top of the wheel arch space. Such a design of the upper demarcation line of the chassis creates conditions for that the available space forwards of the front wheel at the driver's side of the truck may be used for packaging of components in the size of a climate unit in the cab or for leg space comfortable for the driver. Preferably, the upper demarcation line of the chassis extending partly around the wheel arch space extends a first distance from the rear position on top of the wheel arch space around the wheel arch space to an intermediate position in the vicinity of the wheel arch space at least 30 degrees and less than 90 degrees from the position on top of the wheel arch space. Advantageously, the upper demarcation line of the chassis extending partly around the wheel arch space extends a first distance from the rear position on top of the wheel arch space around the wheel arch space to an intermediate position in the vicinity of the wheel arch space about 45 degrees from the position on top of the wheel arch space.

According to further development of the last-mentioned embodiment of the invention, the upper demarcation line of the chassis extends a second distance along a substantially straight line from the intermediate position towards the forwards position in a longitudinal direction of the chassis. Such a design of the upper demarcation line of the chassis creates further conditions for efficient use of the available space forwards of the front wheel at the driver's side of the truck. Preferably, the upper demarcation line of the chassis extends substantially in parallel to a longitudinal direction of the chassis along said second distance. Further preferably, said second distance covers at least about half the total distance between the wheel arch space and a front surface of the chassis. Further preferably, said second distance covers at least 25% and preferably at least 50% of an extension of the wheel arch space in a longitudinal direction of the chassis from the wheel arch space towards a front surface of the chassis.

According to another embodiment of the invention, the chassis comprises the complete wheel arch for the front wheel at the driver's side of the chassis. This design creates conditions for an efficient use of the available space in the truck. More specifically, as a result of the complete wheel arch being fixed to the chassis, the space required for pivoting the part of the wheel arch attached to the cab according to prior art may now be used more efficiently. Especially, this design creates conditions for positioning the wheel arch closer to the wheel than if the wheel arch or portions thereof are part of the cab. Further, the design creates conditions for an inbuilt sound shield between the wheel arch and the cab in a space efficient manner. Preferably, the wheel arch covers at least 180 degrees of the circumference of a wheel for being received in the wheel arch. Preferably, the wheel arch is symmetrical in a plane perpendicular to a longitudinal direction of the chassis.

According to another embodiment of the invention, the chassis comprises at least one step for climbing when entering a cab, when such a cab is attached to the chassis, and said step is positioned below a lowered portion of the upper demarcation line of the chassis in front of said wheel arch space. Thus, the chassis comprises at least one step positioned below the available space forwards of the front wheel at the driver's side of the truck, which step and the associated space for a foot when climbing defines the lowermost extension of the available space forwards of the front wheel. Preferably, the lowered portion extends the complete distance between the intermediate position and the forwards position in the longitudinal direction of the chassis. Especially, the extension of said step overlaps with the lowered portion. More preferably, a length of the lowered portion of the upper demarcation line of the chassis in front of said wheel arch space is at least as long as a width of said step in a longitudinal direction of the chassis in the longitudinal direction of the chassis.

According to the invention, the chassis comprises two means for suspension of the cab at a rear portion thereof and that each of the suspension means is positioned in the vicinity of and preferably directly adjacent an external lateral side wall of the chassis. As a result of the lateral position of the suspension means, there will be less movements of the cab in relation to the chassis, and especially less roll around a longitudinal axis of the truck during driving and thereby improved riding comfort. Further, the lateral position of the suspension means creates conditions for an improved and/or cost-efficient sealing and/or sound shielding between the cab and chassis. The suspension means is designed for a releasable connection with regard to a corresponding suspension means of the cab for allowing cab tilting. A portion of each of the suspension means for contacting the corresponding suspension means of the cab is positioned within 25% of the complete distance between a longitudinal centre line of the chassis and the external lateral side wall of the chassis. Advantageously, the contact portion of each of the suspension means is positioned within 20% of the complete distance between a longitudinal centre line of the chassis and the external lateral side wall of the chassis. Especially, the contact portion of each of the suspension means is positioned within 15% of the complete distance between a longitudinal centre line of the chassis and the external lateral side wall of the chassis. Even more preferably, the contact portion of each of the suspension means is positioned within 10% of the complete distance between a longitudinal centre line of the chassis and the external lateral side wall of the chassis.

According to the invention, it comprises a means for shielding sound from the engine to the environment and that the sound shielding means is positioned on the external structure of the upper chassis part at the driver's side of the chassis defining the upper demarcation line. Preferably, the sound shielding means extends over the wheel arch and is positioned in contact with the wheel arch on a top surface of the wheel arch. The sound shielding means is elongated and extends along at least a substantial portion of the external structure forming the cab interface in a longitudinal direction of the chassis. Advantageously, the sound shielding means extends along substantially the entire longitudinal distance of the chassis defining the cab interface. The elongated sound shielding means preferably comprises an element flexible in its transverse direction, such as a hollow member, tube, strip or similar.

According to a second aspect of the invention, it is provided a truck cab, which comprises a lower part defining an interface to a truck chassis, wherein an external structure of the lower cab part has a lower demarcation line extending partly around a space for a wheel arch between a rear position on top of the wheel arch space and a forwards position in front of the wheel arch space, which forwards position is at a lower position in a height direction of the cab than the rear position. Said wheel arch space is positioned at a driver's side of the cab.

This truck cab design creates conditions for an efficient use of the available space forwards of the front wheel at the driver's side of the truck. More specifically, the cab will enclose said available space forwards of the front wheel. Consequently, said available space forwards of the front wheel may be used for packaging of components in the cab or for leg space for the driver.

The forwards position is preferably at least 15 cm, more preferably at least 20 cm and advantageously at least 25 cm lower than the rear position in the cab height direction.

According to one embodiment of the invention, said lower demarcation line of the cab extends below said rear position a distance which is at least 25% and preferably at least 50% of the extension of the wheel arch space in a longitudinal direction of the cab from the wheel arch towards a front surface of the cab. Such a design of the lower demarcation line of the cab creates conditions for that said available space forwards of the front wheel at the driver's side of the truck may be used for packaging of components in the size of a climate unit in the cab or for leg space comfortable for the driver.

According to another embodiment of the invention, the lower demarcation line of the cab extending partly around the wheel arch space extends a first distance from the rear position on top of the wheel arch space around the wheel arch space to an intermediate position in the vicinity of the wheel arch space at least 20 degrees and less than 120 degrees from the position on top of the wheel arch space. Such a design of the lower demarcation line of the cab creates conditions for that said available space forwards of the front wheel at the driver's side of the truck may be used for packaging of components in the size of a climate unit in the cab or for leg space comfortable for the driver. Preferably, the lower demarcation line of the cab extending partly around the wheel arch space extends a first distance from the rear position on top of the wheel arch space around the wheel arch space to an intermediate position in the vicinity of the wheel arch space at least 30 degrees and less than 90 degrees from the position on top of the wheel arch. Advantageously, the lower demarcation line of the cab extending partly around the wheel arch space extends a first distance from the rear position on top of the wheel arch space around the wheel arch space to an intermediate position in the vicinity of the wheel arch space about 45 degrees from the position on top of the wheel arch.

According to another embodiment of the invention, the lower demarcation line of the cab extends a second distance along a substantially straight line from the intermediate position towards the forwards position in a longitudinal direction of the cab. Such a design of the lower demarcation line of the cab creates further conditions for efficient use of the available space forwards of the front wheel at the driver's side of the truck. Preferably, the lower demarcation line of the cab extends substantially in parallel to a longitudinal direction of the cab along said second distance. Further preferably, said second distance covers at least about half the total distance between the wheel arch space and a front surface of the cab.

According to another embodiment of the invention, the cab comprises a driver's compartment floor, and the driver's compartment floor has such an extension at the driver's side of the cab that a front space is defined between the driver's compartment floor and the external structure of the lower part at said forwards position, and especially along the distance between the intermediate position and the forwards position. This front space may be used for packaging of components, such as a climate unit, which is traditionally arranged in an instrument panel at the side of a steering wheel, wherein the instrument panel may be designed in a different way, especially with a reduced size, which in turn creates conditions for a larger windshield and improved frontal visibility for the driver.

According to another embodiment of the invention, the driver's compartment floor has such an extension above the front space that it is closer to a height defined by said rear position than a height defined by said forwards position. Such an extension of the driver's compartment floor creates further conditions for packaging components of substantial size in the front space. Preferably, the driver's compartment floor extends at least to a substantial extent and preferably in its entirety above a height defined by said a rear position above the front space.

According to another embodiment of the invention, the lower cab part comprises an engine tunnel and the driver's compartment floor extends at a height in the vicinity of a top part of the engine tunnel above the front space transversely from the engine tunnel to a side wall of the cab at the driver's side. Such an extension of the driver's compartment floor creates further conditions for packaging components of substantial size in the front space.

According to another embodiment of the invention, the driver's compartment floor is substantially flat above said front space. This design creates conditions for improved driver visibility and packaging and/or storing of components/material in the cab,. Preferably, the driver's compartment floor extends in a plane in parallel with a longitudinal direction of the cab and a transverse direction of the cab above said front space.

According to another embodiment of the invention, the cab comprises a lower wall extending substantially in parallel with and below the driver's compartment floor at a height substantially commensurate with the forwards position of the lower demarcation line of the cab, wherein the front space is defined between the driver's compartment floor and the lower wall at the forwards position. Thus, the cab may be provided with a double floor, wherein said driver's compartment floor represents an upper floor and the lower wall defines said external structure of the lower part of the cab. Said available space in front of the wheel is positioned between these two floors and is preferably closed off from an engine compartment.

According to a third aspect of the invention, it is provided a truck, which comprises a chassis according to anyone of the above embodiments and a cab according to anyone of the above embodiments, wherein the interface between the chassis and the cab is designed so that the upper demarcation line of the chassis is commensurate with the lower demarcation line of the cab. More specifically, the chassis is configured for being provided with one of a plurality of cab designs specifically configured for that chassis. Thus, the interface of the chassis is fixed for all cab variants.

Further, all cab variants may be provided with a common platform (comprising said lower part) with an interface which is fixed to match said chassis interface. The size and design of an upper part of the cabs (comprising the driver's compartment) may vary in a plurality of ways between different cab variants.

The term "interface" is herein used for comprising both the shape of the relevant components/surfaces and the position of any relevant connections between the chassis and the cab. Thus, by means of designing the chassis with a fixed interface and all cab variants with a common interface, all or at least a substantial part of the mechanical and/or electrical connections between the chassis and the cab may be standardized, which is cost-efficient and facilitates assembly. Many of the connections that transmit control signals are mechanical linkages, which extend between or passing the cab/chassis interface. For example, to control the direction of the truck, a driver sends control signals to the steering system via a steering column. By standardizing such connections, significant cost-efficiency may be achieved. Further examples of such connections comprising pipe routing for signals and fluids comprise electrical wiring, cooling water tubes and hoses for pneumatics. Connection members in the form of cables, wiring, hoses etc are preferably bundled together and routed at certain points between the cab and chassis, especially in connection with the pivot means for pivoting the cab in relation to the chassis.

For example, trucks in the form of semi-trailer tractors may be categorized depending on the size of the cab. One such categorization is based on the height of the cab roof above the ground, for example in a low, medium and heigh categorization. Traditionally, both the truck chassis and cab have a first design for a truck in the low categorization, a second design, which differs from the first design, for a truck in the medium categorization and a third design, which differs from the first and second designs, for a truck in the high categorization. By virtue of the above described truck design, the same chassis design may be used for a plurality of cab designs, thereby achieving a modular design for trucks, which is configured for an efficient use of the available space in the truck for packaging of components and/or improving driver comfort/visibility.

### BRIEF DESCRIPTION OF THE DRAWINGS

The present invention may best be understood from the following detailed description of the embodiment examples, but not restricted to the embodiment examples, wherein:
Figure 1 shows a truck with a forward-control cab according to a first embodiment in a front perspective view from above,
Figure 2 shows the truck from figure 1 in a side view with a tilted cab,
Figure 3 shows the truck chassis according to a first embodiment in a front perspective view similar to the view in figure 1.
Figure 4 shows a side view of a front section of the chassis of figure 3 at a driver's side.
Figure 5 shows the truck cab according to a first embodiment in a front perspective view similar to the view in figure 1.
Figure 6 shows a lower portion of the truck cab of figure 5 in a front perspective view from below.
Figure 7 shows the interior of the truck cab of figure 5 in a perspective view from above.
Figure 8 shows a side view of the truck of figure 1 with a field of vision illustrated.
Figure 9 shows an exploded perspective view of the truck of figure 1.
Figure 10 shows an exploded perspective view of a front section of the truck of figure 1.
Figures 11-13 show a truck cab according to a second embodiment in views similar to the views in figure 5-7.
Figure 14 shows a truck according to a second embodiment comprising the chassis according to figure 3 and the cab according to figure 11.

### DESCRIPTION OF THE PREFERRED EMBODIMENTS

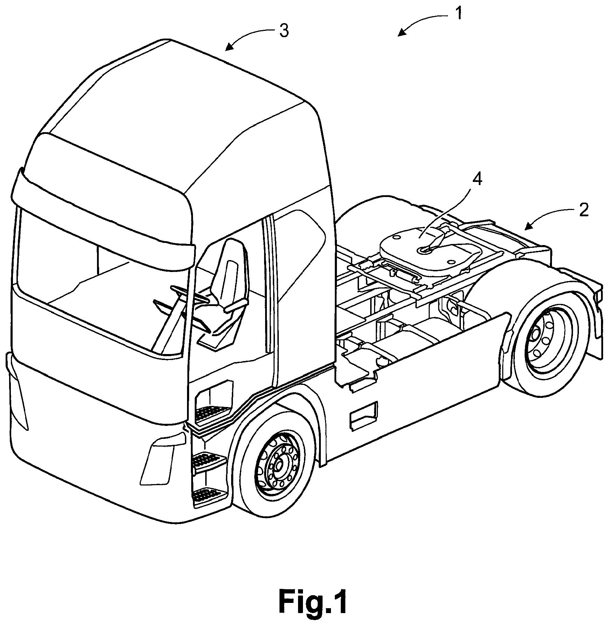

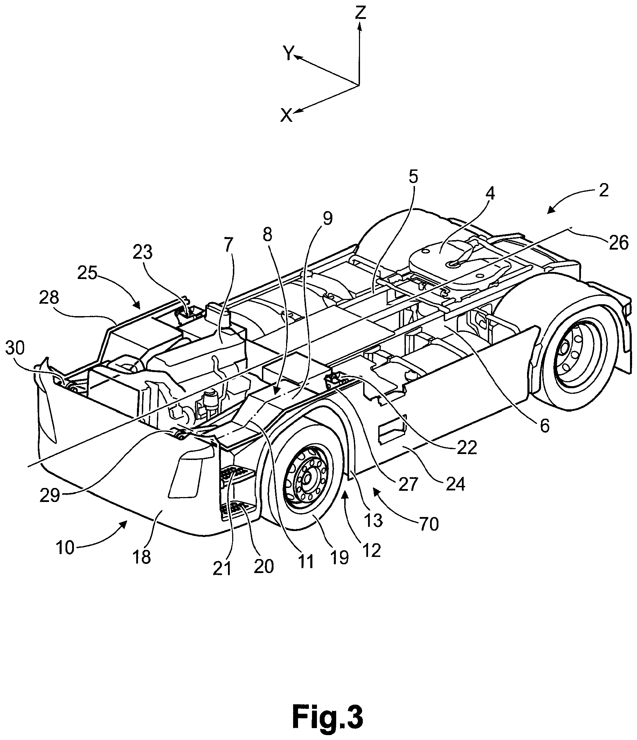

Figure 1 shows a truck 1 in the form of a semi-trailer tractor in a front perspective view according to a first embodiment. The truck is shown without a driver's door attached. The truck comprises a chassis 2 and a cab 3. The cab 3 is attached to the chassis 2. The cab 3 is a so-called forward-control cab, which is located above an engine 7, see figure 3. To provide access to the engine 7 with respect to service and maintenance the entire cab 3 can be tilted forwards. The chassis 2 comprises at least one pair of front ground engaging wheels and at least one pair of rear ground engaging wheels. Further, the chassis comprises a trailer connection assembly, which comprises a fifth wheel 4 to which a semi-trailer (not shown) may be connected. The fifth wheel 4 is positioned on top of a chassis support structure in the region of the rear pair of wheels in a longitudinal direction of the truck. The truck 1 is especially designed for long-haul operations.

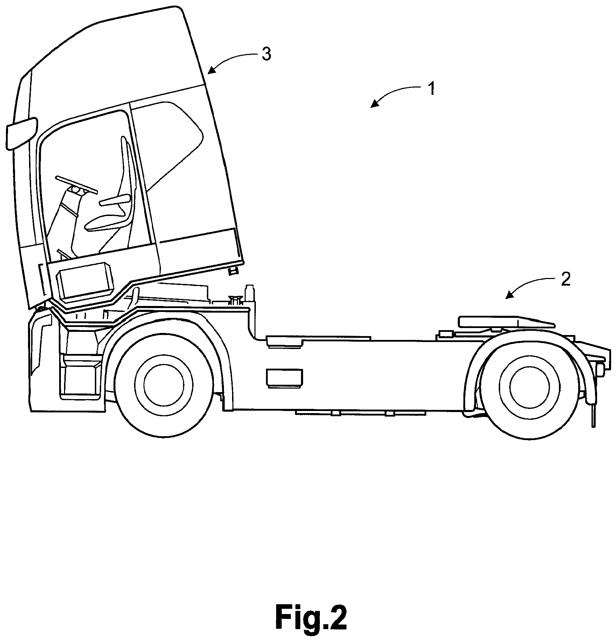

Figure 2 shows the truck 1 in a side view, wherein the cab 3 is tilted an angle forwards in relation to the chassis 2.

Figure 3 shows the chassis 2 in a front perspective view similar to the view in figure 1. The chassis 2 comprises a pair of elongate beams 5,6 extending in a longitudinal direction X of the chassis 2. The engine 7 and its associated driveline and axles etc are rigidly connected to the elongate beams 5,6.

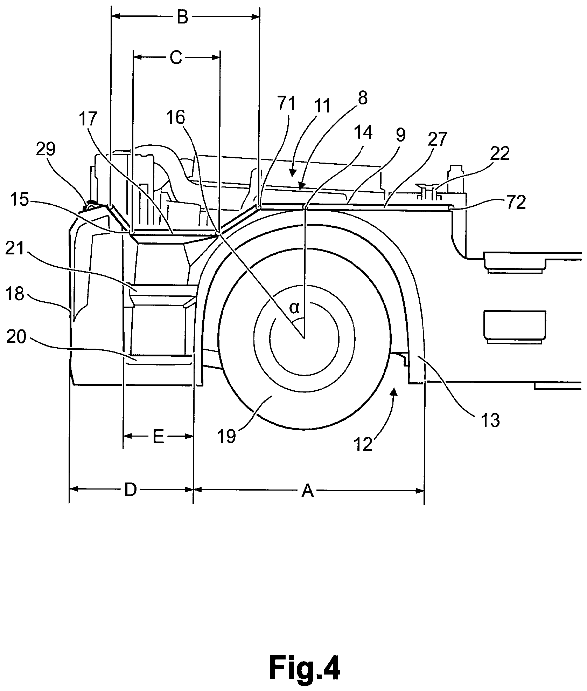

Figure 4 shows a side view of a front section of the chassis 2 at a driver's side 10 of the chassis 2. The chassis 2 comprises a part forming a front surface 18 of the truck 1 and a wall arrangement 70 forming an exterior side of the truck between the front surface 18 and a position behind a front wheel 19 at the driver's side 10, wherein the wall arrangement 70 comprises a wheel arch 13. Further, the wall arrangement 70 of the chassis 2 comprises at least one step 20,21 positioned in front of said front wheel 19 and in a vertical position at or above a rotational axis of the front wheel, which step forms an instep for driver entry into the cab.

Referring now to both figure 3 and 4, the chassis 2 comprises an upper part 8 defining an interface to the cab 3, wherein an external structure or surface 9 of the upper chassis part 8 at a driver's side 10 of the chassis 2 has an upper demarcation line 11 extending partly around a space 12 for a wheel arch 13, or mudguard, between a rear position 14 on top of the wheel arch space 12 and a forwards position 15 in front of the wheel arch space 12, which forwards position 15 is at a lower position in a height direction Z of the cab than the rear position 14. The rear position 14 is here defined as a position commensurate with a plane perpendicular to the longitudinal direction X of the chassis centrally with regard to the wheel arch space 12 and especially through a rotational axis of a frontmost wheel 19. The upper demarcation line 11 is in figure 4 illustrated extending in a plane perpendicular to a transverse direction Y of the chassis 3. The plane of the upper demarcation line 11 extends at a midpoint of the wheel arch 13 in the transverse direction Y of the chassis 2.

The upper demarcation line 11 of the chassis extends below said rear position 14 a distance B which is at least 25% and preferably at least 50% of the extension A of the wheel arch space 12 in the longitudinal direction X of the chassis 2 from the wheel arch space 12 towards the front surface 18 of the chassis.

The upper demarcation line 11 of the chassis 2 extending partly around the wheel arch space 12 extends a first angle α from the rear position 14 on top of the wheel arch around the wheel arch to an intermediate position 16 in the vicinity of the wheel arch space at least 20 degrees and less than 120 degrees, preferably between 30-90 degrees, more preferably 35-60 degrees and advantageously about 45 degrees from the position on top of the wheel arch.

In the design shown in figure 4, the upper demarcation line 11 extends a first distance substantially in parallel with the longitudinal direction X of the chassis from the rear position 14 to a further intermediate position 71 and from said position 71 along a substantially straight line slightly downwards to the intermediate position 16. Thus, the upper demarcation line 11 forms an angle between two substantially straight portions at the position 71. According to an alternative design, the upper demarcation line may partly or in its entirety extend along a curved path between the rear position 14 and the intermediate position 16, wherein the curvature of the upper demarcation line is preferably in parallel with the wheel arch and/or wheel periphery.

The upper demarcation line 11 of the chassis 2 extends a second distance C along a substantially straight line 17 from the intermediate position 16 towards the forwards position 15 in the longitudinal direction X of the chassis. Said second distance C covers at least about half the total distance D between the wheel arch space and the front surface 18 of the chassis. A front section of the chassis in front of the forwards position 15 is reserved for headlamps and/or the grille and other equipment.

The upper demarcation line 11 of the chassis 2 extends below said rear position 14 over at least 25% of and preferably at least 50% of the total distance D from the wheel arch 13 to a front surface 18 of the chassis in the longitudinal direction X of the chassis. The upper demarcation line 11 of the chassis 2 extends substantially in parallel to a longitudinal direction X of the chassis along said second distance.

The upper demarcation line 11 extends between the rear position 14 on top of the wheel arch space 12 and a position 72 defining an end of the cab interface behind the wheel arch 13 in the longitudinal direction X of the chassis 2. The distance between the rear position 14 on top of the wheel arch 13 and the position 72 behind the wheel arch is more than half the extension of the wheel arch space 12 in the longitudinal direction X of the cab.

The chassis 2 comprises the complete wheel arch 13 for the front wheel 19 at the driver's side 10 of the chassis 2. The wheel arch 13 covers at least 180 degrees of the circumference of the wheel 19 received in the wheel arch.

The step 20,21 for climbing when entering the cab 3 is positioned below a lowered portion 17 of the upper demarcation line 11 of the chassis 2 defined between the forwards position 15 and intermediate position 16 in front of said wheel arch 13. More specifically, the chassis comprises two steps 20,21, on above the other.

A length C of the lowered portion of the upper demarcation line 11 of the chassis in front of said wheel arch space is at least as long as a width E of said step 20,21 in the longitudinal direction X of the chassis 2.

The chassis 2 comprises two means 22,23 for suspension of the cab 3 at a rear portion thereof. Each of the suspension means 22,23 is positioned in the vicinity of an external lateral side wall 24,25 of the chassis. More specifically, each of the suspension means 22,23 is positioned within 25% of the complete distance between a longitudinal centre line 26 of the chassis and the external lateral side wall 24,25 of the chassis. Arranging the suspension means 22,23 in the vicinity of an external lateral side wall 24,25 of the chassis 2 creates conditions for a reduced movement of the cab 3 in relation to the chassis 2 during operation, and especially less roll. The roll movement is defined as a movement around an axis in the longitudinal direction X of the truck. In this way, little space is required for allowing roll movements. In other words, by arranging the suspension means 22,23 in the vicinity of an external lateral side wall 24,25 of the chassis 2, the cab 3 and chassis 2 will move more in unison, which in turn creates conditions for a space efficient and cost efficient sound shielding arrangement, see below. The suspension means 22,23 comprises dampening means so that the cab is dampened and vibrations from the chassis are absorbed.

The chassis 2 comprises a means 27,28 for shielding sound from the engine 7 to the environment. The sound shielding means 27,28 is positioned on the external structure or surface of the upper chassis part at the driver's side 10 of the chassis defining the upper demarcation line 14. The sound shielding means 27,28 is elongated and extends along at least a substantial portion and preferably the entire length of the external structure or surface forming the cab interface in a longitudinal direction X of the chassis. Especially, the sound shielding means 27,28 preferably comprises an element flexible in its transverse direction, such as a hollow member, tube, strip or similar. The sound shielding means 27,28 is compressible in a height direction Z of the chassis 2. The sound shielding means 27,28 may be formed by rubber material.

The chassis 2 comprises tilting means 29,30 positioned at a front and upper section of the chassis 2 for a forwards tilting of the cab 3 in relation to the chassis 2 between a lower position and a raised position when arranged in an operative state on the chassis.

The design of the chassis 2 with regard to the cab interface is according to the shown embodiment mirrored with regard to a plane defined by the chassis centre line 26 and height direction Z so that the chassis comprises a similar interface region on a side opposite of the driver's side in relation to the design of the driver's side.

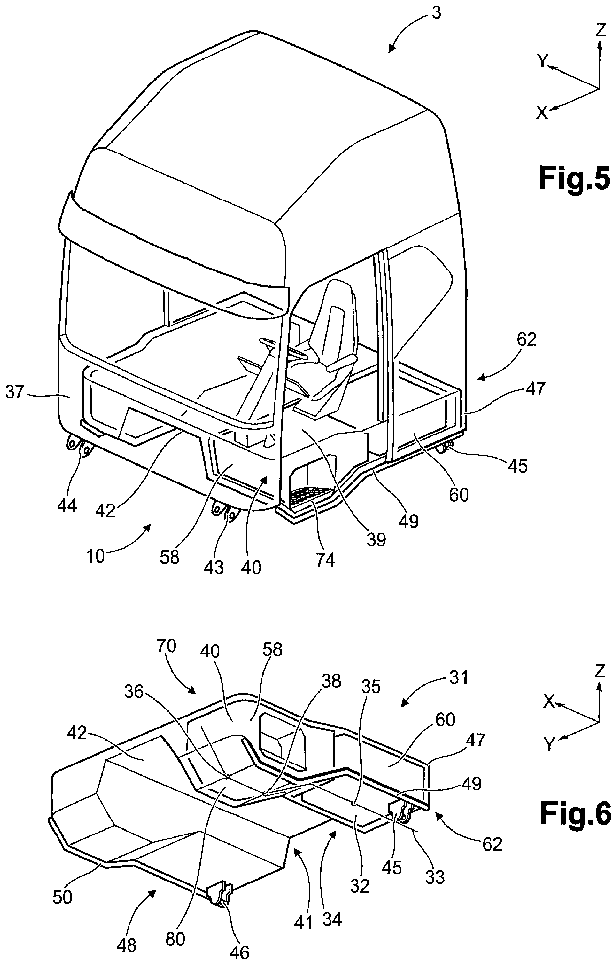

Figure 5 shows the cab 3 from figure 1 in a perspective front view from above. Figure 6 shows a lower part 31 of the cab 3 in a perspective front view from below. The lower part 31 defines an interface to the truck chassis 2, wherein an external structure or surface 32 of the lower cab part 31 at a driver's side 10 of the cab has a lower demarcation line 33 extending partly around a space 34 for the wheel arch 13 between a rear position 35 on top of the wheel arch space 34 and a forwards position 36 in front of the wheel arch space, which forwards position 36 is at a lower position in a height direction of the cab than the rear position 35. The rear position 35 is here defined as a position commensurate with a plane perpendicular to the longitudinal direction X of the cab centrally with regard to the wheel arch space and especially through a position for a rotational axis of a frontmost wheel 19.

The lower demarcation line 33 is in figure 6 illustrated extending in a plane perpendicular to a transverse direction Y of the cab 3. The plane of the lower demarcation line 33 extends at a midpoint of the wheel arch in the transverse direction Y of the cab 3.

Referring now also to figure 4, said lower demarcation line 33 of the cab 3 extends below said rear position a distance B which is at least 25% and preferably at least 50% of the extension of the wheel arch space A in a longitudinal direction X of the cab from the wheel arch 13 towards a front surface 37 of the cab. The lower demarcation line 33 of the cab extending partly around the wheel arch space 34 extends an angle from the rear position 35 on top of the wheel arch space 34 around the wheel arch space to an intermediate position 38 in the vicinity of the wheel arch space at least 20 degrees and less than 120 degrees from the position on top of the wheel arch space. The lower demarcation line of the cab 3 extending partly around the wheel arch space covers at least 30 degrees and less than 60 degrees of the wheel arch space.

The lower demarcation line 33 of the cab extends a second distance C along a substantially straight line from the intermediate position 38 towards the forwards position 36 in the longitudinal direction X of the cab. The second distance C covers at least about half the total distance D between the wheel arch space 34 and the front surface 37 of the cab. The lower demarcation line 33 of the cab 3 extends below said rear position 35 over at least 25% of and preferably at least 50% of the total distance D from the wheel arch space 34 to the front surface 37 of the cab 3 in the longitudinal direction X of the cab.

The cab 3 comprises tilting means 43,44 positioned at a front and lower section of the cab for a forwards tilting of the cab in relation to the chassis 2 between a lower position and a raised position when arranged in an operative state on the chassis. Said cab tilting means 43,44 are configured for being pivotably connected to the tilting means 29,30 of the chassis 2. Said tilting means may be provided with dampening means so that the cab is dampened and vibrations from the chassis are absorbed.

Further, the cab 3 comprises two means 45,46 for suspension of the cab and that each of the suspension means is positioned in the vicinity of an external lateral side wall of the cab 3. Each of the suspension means is positioned within 25% of the complete distance between a longitudinal centre line of the cab and the external lateral side wall of the cab. Said suspension means 45,46 are configured for being releasably connected to the corresponding suspension means 22,23 of the chassis 2.

The cab 3 comprises a means 49,50 for shielding sound from an engine of the truck to the environment. The sound shielding means 49,50 is positioned on the external structure of the lower cab part 31 at the driver's side of the cab defining the lower demarcation line 33. The sound shielding means 49,50 is elongated and extends along at least a substantial portion of and preferably the entire length of the external surface forming the chassis interface in a longitudinal direction of the cab. The sound shielding means 49,50 is configured for being arranged in parallel with and contacting the corresponding sound shielding means 27,28 of the chassis 2.

The lower cab part 31 comprises an engine tunnel 41 for receiving said engine 7.

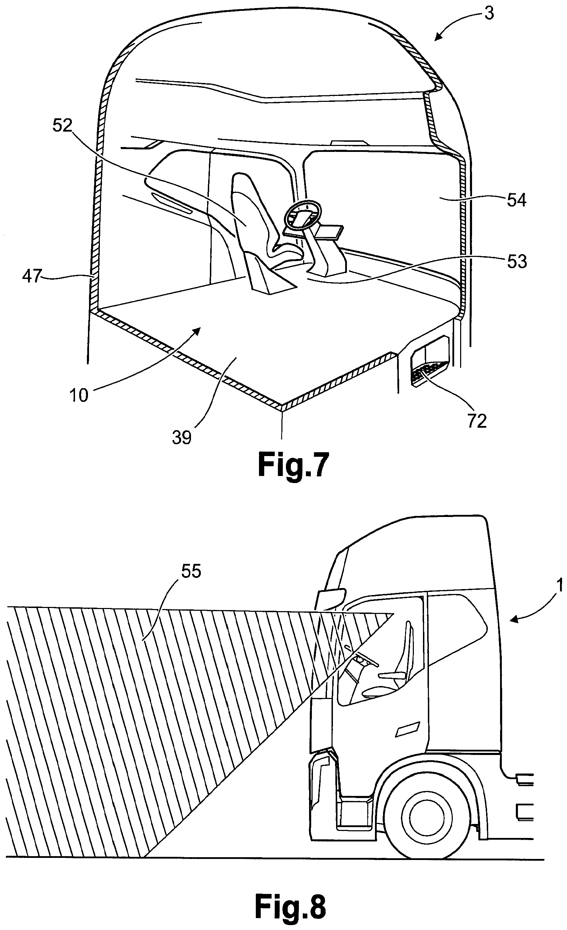

Figure 7 shows a perspective side view from behind inside the cab 3. The cab 3 comprises a driver's compartment floor 39. The driver's compartment floor 39 has such an extension at the driver's side 10 of the cab that a front space 40, see figure 6, is defined between the driver's compartment floor 39 and the external structure 32 of the lower part 31 at said forwards position 36 and especially above the distance between the intermediate position 38 and the forwards position 36.

The driver's compartment floor 39 has such an extension above the front space 40 that it is closer to a height defined by said a rear position 35 than a height defined by said forwards position 36. More specifically, the driver's compartment floor 39 extends at least to a substantial extent and preferably in its entirety above a height defined by said a rear position 35 above the front space 40. Preferably, the driver's compartment floor 39 extends at least to a substantial extent and preferably in its entirety at least 20 cm above a height defined by said a rear position 35 above the front space 40.

The driver's compartment floor 39 extends at a height in the vicinity of a top part 42 of the engine tunnel 41 above the front space transversely from the engine tunnel 41 to a side wall 47 of the cab 3 at the driver's side.

More specifically, the driver's compartment floor 39 extends in a plane in parallel with the longitudinal direction X of the cab 3 and the transverse direction Y of the cab 3 above said front space. Preferably, the driver's compartment floor 39 is at least substantially flat the entire distance between the opposite side walls of the cab.

Turning now again to figure 5 and 6, the cab 3 comprises a lower wall 80 extending substantially in parallel with and below the driver's compartment floor 39 at a height substantially commensurate with the forwards position 36 of the lower demarcation line 33 of the cab, wherein the front space 40 is defined between the driver's compartment floor 39 and the lower wall 80 between the forwards position 36 and the intermediate position 38.

The cab 3 comprises a seat 52 for the driver, which is positioned in the transverse direction Y of the cab at least partly above and behind said front space 40. The driver's compartment floor 39 comprises a foot rest portion 53 in front of said seat. The foot rest portion 53 of the driver's compartment floor 39 is positioned above a height defined by the rear position 35. Thus, the foot rest portion 53 is positioned at a height position above the upper wall 42 of the engine tunnel 41.

The cab 3 comprises electronic components for the driver's operation of the truck, which are stored in said front space 40. Said electronic components may be such units which traditionally have been positioned in an instrument panel of the truck, such as a climate unit 58 for heating, ventilating or air conditioning the interior of the cab 3. The above design of the truck 1 and especially the cab 3 with the front space 40 creates conditions for placing the electronic components in said front space 40.

Further, the driver's compartment floor 39 is positioned at a distance from a lower surface 32 of the cab 3 at a position above and behind the wheel arch space defining a rear space 62, which may be used for storing an electronics unit 60. This, in turn, leads to that the volume of the instrument panel may be eliminated or at least reduced to a great extent. This in turn leads to that the driver frontal visibility may be significantly improved. The windscreen 54 can therefore be significantly increased and is here of a bus-type windscreen character. Figure 8 shows a side view of the truck 8, wherein the driver frontal visibility 55 is indicated. A control information display projection device may be used, wherein control information may be communicated to the driver via projection on the windscreen.

The cab 3 comprises a step 74, which is positioned at a height commensurate with the front space 40. However, due to the depth of the space 40, ie the distance between the side wall of the cab and the engine tunnel, the step 74 consumes relatively little space from the totally available space in front of the front wheel 19. Both steps 20,21 of the chassis 2 are positioned below said space 40 in front of the front wheel 19.

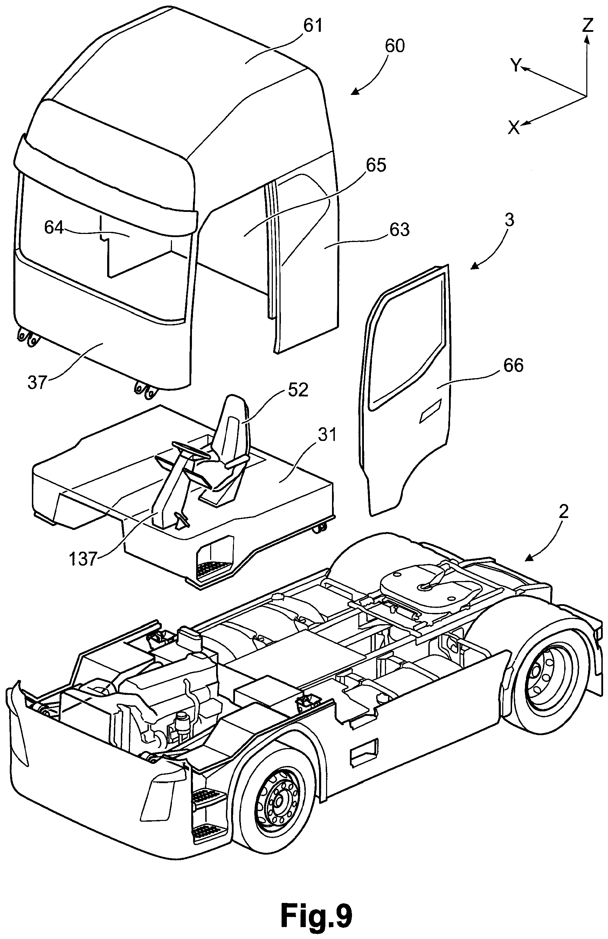

Figure 9 shows the truck 1 in a partly exploded perspective view. The cab 3 comprises an upper part 60 comprising a roof 61, side walls 63,64 and front and back walls 37,65. The upper part 60 is open downwards for receipt of the lower cab part 31 comprising a cab floor structure, a steering wheel structure 137 and the driver's seat 52. A cab door 66 is also shown.

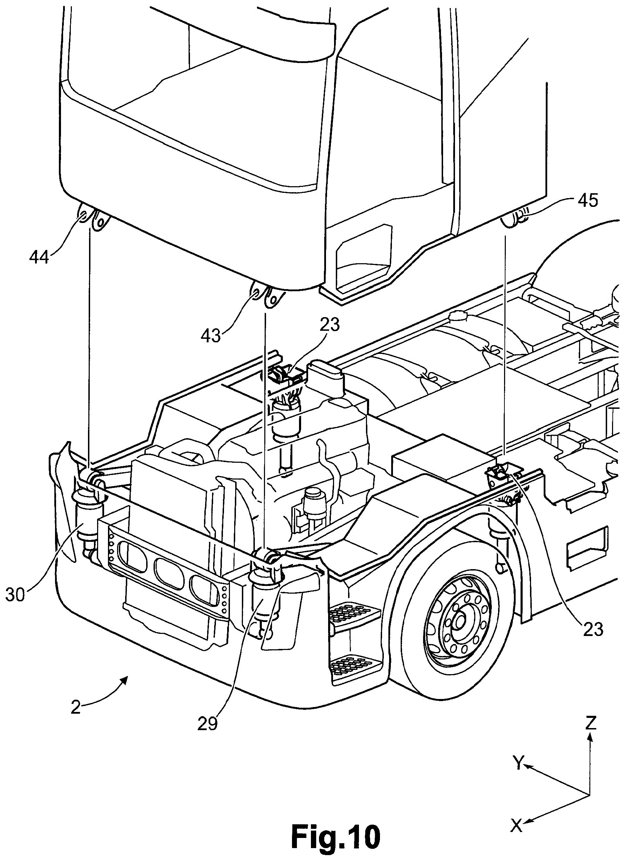

Figure 10 shows a front section of the truck 1 in a partly exploded perspective view. Especially, the releasable connection of the suspension means 45,46 of the cab 3 to the corresponding suspension means 22,23 of the chassis 2 is shown. Further, the pivotal connection of the tilting means 43,44 of the cab 3 to the corresponding tilting means 29,30 of the chassis is disclosed.

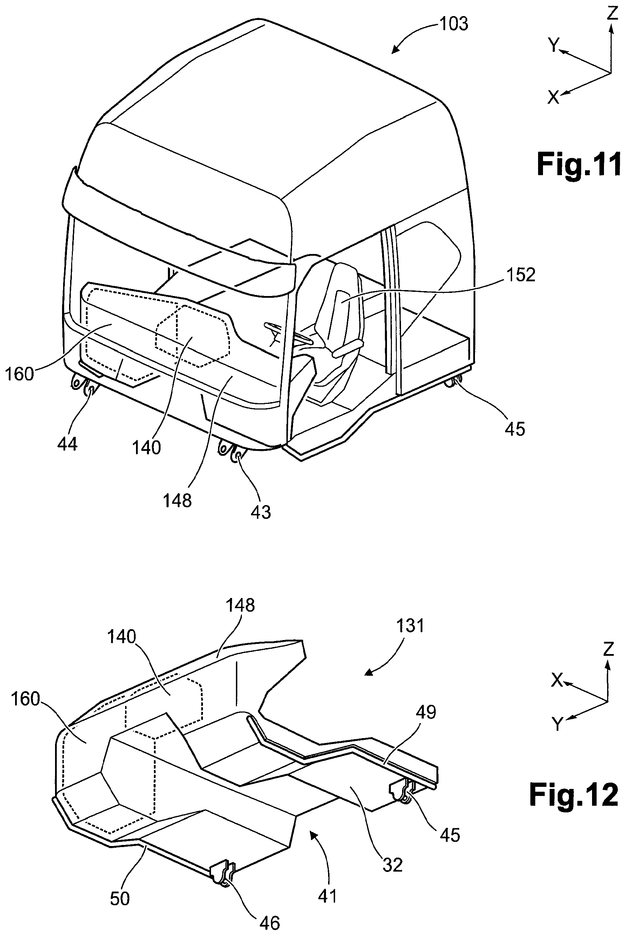

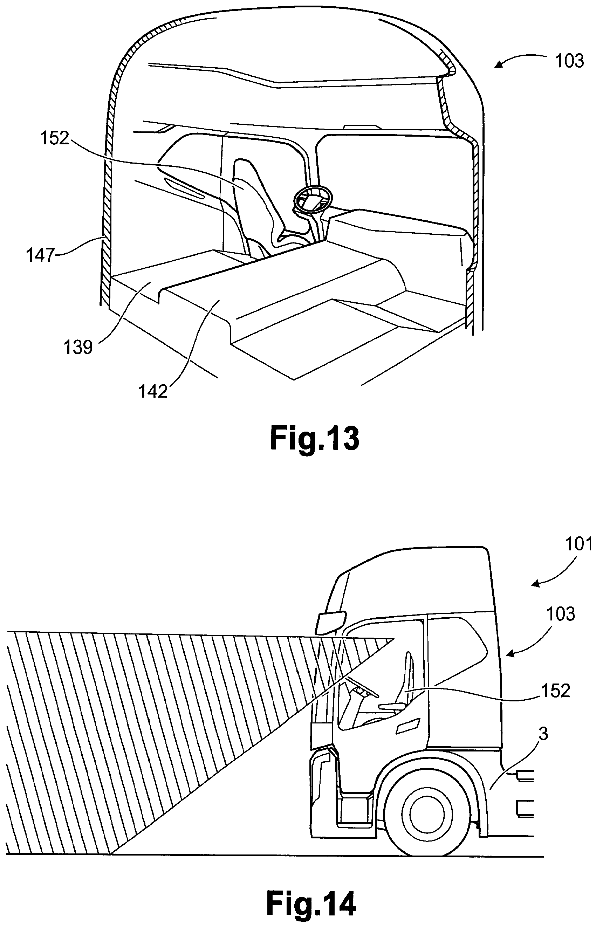

Figures 11-13 show a cab 103 according to a second embodiment. The cab 103 is configured with an identical chassis interface as the cab 3 according to the first embodiment. In this way, any one of the two cabs 3,103 may be fitted to the chassis 2. Figure 14 shows a truck according to a second embodiment comprising the cab 103 according to the second embodiment fitted to the same chassis 2 as in figures 1-4.

The cabs 3,103 are of different sizes. More specifically, the cab 103 according to the second embodiment is of a smaller size than the cab according to the first embodiment. More particularly, the cab 103 according to the second embodiment is of a design with a lower roof height than the cab 3 according to the first embodiment and is especially designed for medium distance and regional work, mainly for distribution work and lighter construction-site operations.

Figure 11 shows the cab 103 in a perspective front view from above corresponding to figure 5 for the cab 3 of the first embodiment. The cab 103 comprises an instrument panel 148 in front of the driver's seat. The instrument panel 148 extends along substantially the complete internal width of the cab between the side walls in the transverse direction Y of the cab. The instrument panel 148 comprises a climate unit 140 and an electronics unit 160, see dotted lines. The climate unit 140 in the second embodiment of the cab 103 corresponds to the climate unit 40 in the first embodiment of the cab. The electronics unit 160 in the second embodiment of the cab 103 corresponds to the electronics unit 60 in the first embodiment of the cab.

Figure 12 shows a lower part 131 of the cab 103 in a perspective front view from below corresponding to figure 6 for the cab 3 of the first embodiment.

Figure 13 shows a perspective side view from behind inside the cab 103 corresponding to figure 7 for the cab 3 of the first embodiment. The driver's compartment floor 139 extends at a height substantially below a top part 142 of the engine tunnel 41 transversely from the engine tunnel 41 to a side wall 147 of the cab 3 at the driver's side. More specifically, the foot rest portion of the floor 139 is at substantially lower height than the upper surface 142 of the engine tunnel. Further, the driver's seat is partly at a lower height than the upper surface 142 of the engine tunnel. Thus, the driver's compartment floor 139 has an extension at the driver's side of the cab 103 extending partly around a space 34 for a wheel arch between a rear position 35 on top of the wheel arch space and a forwards position 36 in front of the wheel arch space, which forwards position 36 is at a lower position in a height direction of the cab than the rear position 35. Preferable, the driver's compartment floor 139 has an extension at least substantially commensurate with a lower demarcation line of the lower cab part. Thus, there is no room for storing any components below the foot rest portion of the driver's compartment floor 139.

The seat 152 is positioned at a substantially lower position in the cab 103 according to the second embodiment in relation to the position of the seat 52 in the cab 3 according to the first embodiment. The difference in seat height may be 40-80 cm and preferably around 60 cm.

The interface between the chassis 2 and the cab 3,103 is designed so that the upper demarcation line of the chassis 2 is commensurate with the lower demarcation line of the cab.

The design of the cab with regard to the chassis interface is according to the first and second embodiment mirrored with regard to a plane defined by the cab longitudinal direction and height direction so that the cab comprises a similar interface region on a side opposite of the driver's side in relation to the design of the driver's side.

The invention must not be regarded as being limited to the examples of embodiment described above, a number of further variants and modifications being feasible without departing from the scope of the following claims.

## Claims

1. A truck chassis comprising an upper part (8) defining an interface to a cab (3,103), wherein an external structure (9) of the upper chassis part (8) has an upper demarcation line (11) extending partly around a space (12) for a wheel arch (13) between a rear position (14) on top of the wheel arch space and a forwards position (15) in front of the wheel arch space, which forwards position (15) is at a lower position in a height direction of the chassis than the rear position (14), wherein the chassis (2) comprises two means (22,23) for suspension of the cab at a rear portion thereof and that each of the suspension means (22,23) is positioned in the vicinity of an external lateral side wall (24,25) of the chassis, wherein the truck chassis comprises a means (27,28) for shielding sound from the engine to the environment and that the sound shielding means (27,28) is positioned on the external structure of the upper chassis part (8) at a driver's side (10) of the chassis defining the upper demarcation line, wherein the sound shielding means (27,28) is elongated and extends along at least a substantial portion of the external structure forming the cab interface in a longitudinal direction of the chassis, **characterized in that** each of the suspension means (22,23) is positioned within 25% of the complete distance between a longitudinal centre line (16) of the chassis and the external lateral side wall (24,25) of the chassis and **in that** said sound shielding means (27,28) is compressible in a height direction (Z) of said chassis (2).

2. A truck chassis according to claim 1, **characterized in that** said upper demarcation line (11) of the chassis extends below said rear position (14) a distance (B) which is at least 25% and preferably at least 50% of an extension (A) of the wheel arch space (12) in a longitudinal direction (X) of the chassis (2) from the wheel arch space (12) towards a front surface (18) of the chassis.

3. A truck chassis according to claim 1 or 2, **characterized in that** the upper demarcation line (11) of the chassis (2) extending partly around the wheel arch space (12) extends a first distance from the rear position (14) on top of the wheel arch space around the wheel arch space to an intermediate position (16) in the vicinity of the wheel arch space (12) at least 20 degrees and less than 120 degrees from the position (14) on top of the wheel arch space.

4. A truck chassis according to claim 3, **characterized in that** the upper demarcation line (11) of the chassis (2) extends a second distance (C) along a substantially straight line from the intermediate position (16) towards the forwards position (15) in a longitudinal direction (X) of the chassis (2).

5. A truck chassis according to claim 4, **characterized in that** said second distance (C) covers at least about half the total distance (D) between the wheel arch space (12) and a front surface (18) of the chassis (2).

6. A truck chassis according to any preceding claim, **characterized in that** the chassis (2) comprises the complete wheel arch (13) for a front wheel (19).

7. A truck chassis according to claim 6, **characterized in that** the wheel arch (13) covers at least 180 degrees of the circumference of the front wheel (19) for being received in the wheel arch.

8. A truck chassis according to claim 2, **characterized in that** the chassis (2) comprises at least one step (20,21) for climbing when entering a cab (3), when such a cab (3) is attached to the chassis (2) and that said step (20,21) is positioned below a lowered portion (17) of the upper demarcation line (11) of the chassis in front of said wheel arch space.

9. A truck chassis according to claim 8, **characterized in that** a length of the lowered portion (17) of the upper demarcation line (11) of the chassis in front of said wheel arch space (12) is at least as long as a width (E) of said step (20,21) in a longitudinal direction (X) of the chassis (2).

10. A truck chassis according to any preceding claim, **characterized in that** the chassis (2) comprises tilting means (29,30) positioned at a front and upper section of the chassis (2) for a forwards tilting of the cab (3,103) in relation to the chassis between a lower position and a raised position when arranged in an operative state on the chassis.

## Patentansprüche

1. Lastkraftwagenfahrgestell umfassend einen oberen Teil (8), der eine Schnittstelle zu einem Fahrerhaus (3, 103) definiert, wobei eine externe Struktur (9) des oberen Fahrgestellteils (8) eine obere Begrenzungslinie (11) aufweist, die sich teilweise um einen Raum (12) für einen Radlauf (13) herum zwischen einer hinteren Position (14) auf dem Radlaufraum und einer vorderen Position (15) vor dem Radlaufraum erstreckt, wobei die vordere Position (15) an einer niedrigeren Position in einer Höhenrichtung des Fahrgestells als die hintere Position (14) ist, wobei das Fahrgestell (2) zwei Mittel (22,23) für eine Aufhängung des Fahrerhauses an einem hinteren Abschnitt davon umfasst, und dass jedes der Aufhängungsmittel (22,23) in der Nähe einer externen seitlichen Seitenwand (24, 25) des Fahrgestells positioniert ist, wobei das Lastkraftwagenfahrgestell ein Mittel (27,28) zum Abschirmen von Geräusch von dem Motor in die Umgebung umfasst, und dass das Geräuschabschirmmittel (27,28) an der externen Struktur des oberen Fahrgestellteils (8) an einer Fahrerseite (10) des Fahrgestells positioniert ist, das die obere Begrenzungslinie definiert, wobei das Geräuschabschirmmittel (27,28) länglich ist und sich entlang mindestens eines wesentlichen Abschnitts der externen Struktur erstreckt, die die Fahrerhausschnittstelle in einer Längsrichtung des Fahrgestells ausbildet, **dadurch gekennzeichnet, dass** jedes der Aufhängungsmittel (22,23) innerhalb von 25 % des vollständigen Abstands zwischen einer Längsmittellinie (16) des Fahrgestells und der externen seitlichen Seitenwand (24,25) des Fahrgestells positioniert ist, und damit das Geräuschabschirmmittel (27,28) in einer Höhenrichtung (Z) des Fahrgestells (2) zusammendrückbar ist.

2. Lastkraftwagenfahrgestell nach Anspruch 1, **dadurch gekennzeichnet, dass** sich die obere Begrenzungslinie (11) des Fahrgestells unterhalb der hinteren Position (14) um einen Abstand (B) erstreckt, der mindestens 25 % und bevorzugt mindestens 50 % einer Erstreckung (A) des Radlaufraums (12) in einer Längsrichtung (X) des Fahrgestells (2) von dem Radlaufraum (12) zu einer vorderen Oberfläche (18) des Fahrgestells ist.

3. Lastkraftwagenfahrgestell nach Anspruch 1 oder 2, **dadurch gekennzeichnet, dass** sich die obere Begrenzungslinie (11) des Fahrgestells (2), die sich teilweise um den Radlaufraum (12) herum erstreckt, sich um einen ersten Abstand von der hinteren Position (14) auf dem Radlaufraum um den Radlaufraum herum zu einer Zwischenposition (16) in der Nähe des Radlaufraums (12) um mindestens 20 Grad und weniger als 120 Grad von der Position (14) auf dem Radlaufraum erstreckt.

4. Lastkraftwagenfahrgestell nach Anspruch 3, **dadurch gekennzeichnet, dass** sich die obere Begrenzungslinie (11) des Fahrgestells (2) um einen zweiten Abstand (C) entlang einer im Wesentlichen geraden Linie von der Zwischenposition (16) zu der vorderen Position (15) hin in einer Längsrichtung (X) des Fahrgestells (2) erstreckt.

5. Lastkraftwagenfahrgestell nach Anspruch 4, **dadurch gekennzeichnet, dass** der zweite Abstand (C) mindestens etwa die Hälfte des Gesamtabstands (D) zwischen dem Radlaufraum (12) und einer vorderen Oberfläche (18) des Fahrgestells (2) abdeckt.

6. Lastkraftwagenfahrgestell nach einem der vorhergehenden Ansprüche, **dadurch gekennzeichnet, dass** das Fahrgestell (2) den vollständigen Radlauf (13) für ein Vorderrad (19) umfasst.

7. Lastkraftwagenfahrgestell nach Anspruch 6, **dadurch gekennzeichnet, dass** der Radlauf (13) mindestens 180 Grad des Umfangs des Vorderrads (19) für eine Aufnahme in dem Radlauf abdeckt.

8. Lastkraftwagenfahrgestell nach Anspruch 2, **dadurch gekennzeichnet, dass** das Fahrgestell (2) mindestens eine Stufe (20,21) zum Besteigen, wenn ein Fahrerhaus (3) betreten wird, umfasst, wenn ein solches Fahrerhaus (3) an dem Fahrgestell (2) angebracht ist, und dass die Stufe (20,21) unterhalb eines abgesenkten Abschnitts (17) der oberen Begrenzungslinie (11) des Fahrgestells vor dem Radlaufraum positioniert ist.

9. Lastkraftwagenfahrgestell nach Anspruch 8, **dadurch gekennzeichnet, dass** eine Länge des abgesenkten Abschnitts (17) der oberen Begrenzungslinie (11) des Fahrgestells vor dem Radlaufraum (12) mindestens so lang wie eine Breite (E) der Stufe (20,21) in einer Längsrichtung (X) des Fahrgestells (2) ist.

10. Lastkraftwagenfahrgestell nach einem der vorhergehenden Ansprüche, **dadurch gekennzeichnet, dass** das Fahrgestell (2) Kippmittel (29, 30) umfasst, die an einem vorderen und oberen Bereich des Fahrgestells (2) angeordnet sind, für ein vorwärts Kippen des Fahrerhauses (3,103) in Bezug auf das Fahrgestell zwischen einer niedrigeren Position und einer angehobenen Position, wenn es in einem Betriebszustand auf dem Fahrgestell angeordnet ist.

## Revendications

1. Châssis de camion comprenant une partie supérieure (8) définissant une interface avec une cabine (3, 103), une structure externe (9) de la partie supérieure de châssis (8) ayant une ligne de démarcation supérieure (11) s'étendant partiellement autour d'un espace (12) pour un passage de roue (13) entre une position arrière (14) au-dessus de l'espace de passage de roue et une position avant (15) devant l'espace de passage de roue, laquelle position avant (15) se trouve au niveau d'une position inférieure dans un direction de hauteur du châssis que la position arrière (14), le châssis (2) comprenant deux moyens (22, 23) pour la suspension de la cabine au niveau d'une partie arrière de celle-ci et consistant en ce que chacun des moyens de suspension (22, 23) est positionné dans le voisinage d'une paroi latérale externe (24, 25) du châssis, le châssis du camion comprenant un moyen (27, 28) permettant de protéger le son du moteur vers l'environnement et consistant en ce que le moyen de protection sonore (27, 28) est positionné sur la structure externe de la partie supérieure de châssis (8) au niveau du côté conducteur (10) du châssis définissant la ligne de démarcation supérieure, le moyen de protection sonore (27, 28) étant allongé et s'étendant le long d'au moins une partie substantielle de la structure externe formant l'interface de cabine dans une direction longitudinale du châssis, **caractérisé en ce que** chacun des moyens de suspension (22, 23) est positionné dans les limites de 25 % de la distance complète entre une ligne médiane longitudinale (16) du châssis et la paroi latérale externe (24, 25) du châssis et **en ce que** ledit moyen de protection sonore (27, 28) est compressible dans une direction de hauteur (Z) dudit châssis (2).

2. Châssis de camion selon la revendication 1, **caractérisé en ce que** ladite ligne de démarcation supérieure (11) du châssis s'étend au-dessous de ladite position arrière (14) sur une distance (B) qui est d'au moins 25 % et de préférence d'au moins 50 % d'une extension (A) de l'espace de passage de roue (12) dans une direction longitudinale (X) du châssis (2) depuis l'espace de passage de roue (12) vers une surface avant (18) du châssis.

3. Châssis de camion selon la revendication 1 ou 2, **caractérisé en ce que** la ligne de démarcation supérieure (11) du châssis (2) s'étendant partiellement autour de l'espace de passage de roue (12) s'étend sur une première distance depuis la position arrière (14) au-dessus de l'espace de passage de roue autour de l'espace de passage de roue vers une position intermédiaire (16) dans le voisinage de l'espace de passage de roue (12) à au moins 20 degrés et inférieur à 120 degrés de la position (14) au-dessus de l'espace de passage de roue.

4. Châssis de camion selon la revendication 3, **caractérisé en ce que** la ligne de démarcation supérieure (11) du châssis (2) s'étend sur une seconde distance (C) le long d'une ligne sensiblement droite depuis la position intermédiaire (16) vers la position avant (15) dans une direction longitudinale (X) du châssis (2).

5. Châssis de camion selon la revendication 4, **caractérisé en ce que** ladite seconde distance (C) couvre au moins environ la moitié de la distance totale (D) entre l'espace de passage de roue (12) et une surface avant (18) du châssis (2).

6. Châssis de camion selon l'une quelconque des revendications précédentes, **caractérisé en ce que** le châssis (2) comprend le passage de roue complet (13) pour une roue avant (19).

7. Châssis de camion selon la revendication 6, **caractérisé en ce que** le passage de roue (13) couvre au moins 180 degrés de la circonférence de la roue avant (19) pour être reçu dans le passage de roue.

8. Châssis de camion selon la revendication 2, **caractérisé en ce que** le châssis (2) comprend au moins une marche (20, 21) pour monter lors de l'entrée dans une cabine (3), lorsqu'une telle cabine (3) est fixée au châssis (2) et **en ce que** ladite marche (20, 21) est positionnée au-dessous d'une partie abaissée (17) de la ligne de démarcation supérieure (11) du châssis devant ledit espace de passage de roue.

9. Châssis de camion selon la revendication 8, **caractérisé en ce qu'**une longueur de la partie abaissée (17) de la ligne de démarcation supérieure (11) du châssis devant ledit espace de passage de roue (12) est au moins aussi longue qu'une largeur (E) de ladite marche (20, 21) dans une direction longitudinale (X) du châssis (2).

10. Châssis de camion selon l'une quelconque des revendications précédentes, **caractérisé en ce que** le châssis (2) comprend un moyen d'inclinaison (29, 30) positionné au niveau d'une section avant et supérieure du châssis (2) permettant une inclinaison vers l'avant de la cabine (3, 103) par rapport au châssis entre une position basse et une position relevée lorsqu'elle est disposée dans un état fonctionnel sur le châssis.
